# EUROPÄISCHE PATENTANMELDUNG

(11) **EP 1 321 726 A2**
(43) Veröffentlichungstag der Anmeldung: **25.06.2003**
(21) Anmeldenummer: 02450275.9
(22) Anmeldetag: 03.12.2002
(51) Int. Cl.: F24J 2/26, F28F 13/00

(54) **Wärmeleitende Verbindung zwischen zwei Metallteilen eines Wärmetauschers, insbesondere eines Sonnenkollektors**

(30) Priorität: 19.12.2001 AT 9612001
(71) Anmelder: Böhm Energietechnik GmbH, 4600 Wels (AT)
(72) Erfinder: Böhm, Martin Ing., 4615 Holzhausen (AT)
(74) Vertreter: Hübscher, Helmut, Dipl.-Ing.

(57) **Zusammenfassung**

Es wird eine wärmeleitende Verbindung zwischen zwei Metallteilen eines Wärmetauschers, insbesondere eines Sonnenkollektors, mit einer Verbindungsschicht (3) zwischen den beiden vorzugsweise aus einem Rohr (2) und einem Absorberblech (2) gebildeten Metallteilen beschrieben. Um vorteilhafte Konstruktionsbedingungen sicherzustellen, wird vorgeschlagen, daß die Verbindungsschicht (3) aus einem dreidimensional vernetzten Vulkanisat mit einer Metallpulverfüllung besteht.

## Beschreibung

Die Erfindung bezieht sich auf eine wärmeleitende Verbindung zwischen zwei Metallteilen eines Wärmetauschers, insbesondere eines Sonnenkollektors, mit einer Verbindungsschicht zwischen den beiden vorzugsweise aus einem Rohr und einem Absorberblech gebildeten Metallteilen.

Zur Aufnahme der Wärmeenergie des Sonnenlichtes werden bei Sonnenkollektoren Absorberbleche eingesetzt, an denen Rohre befestigt werden, durch die ein Wärmeträger gefördert wird. Um nicht nur die unmittelbar auf die Rohre einwirkende Wärmestrahlung, sondern auch die vom Absorberblech aufgenommene Wärmeenergie in vorteilhafter Weise für die Erwärmung des durch die Rohre strömenden Wärmeträgers ausnützen zu können, muß für eine gute, wärmeleitende Verbindung zwischen den Rohren und den Absorberblechen gesorgt werden. Zu diesem Zweck werden die Rohre üblicherweise auf die Absorberbleche aufgelötet. Solche Lötverbindungen stellen einen vorteilhaften Wärmeübergang vom Absorberblech zu den Rohren sicher. Nachteilig bei diesen Lötverbindungen ist allerdings, daß sie nur vergleichsweise aufwendig herzustellen sind, keinen ausreichenden Ausgleich von Wärmedehnungen erlauben, wenn mit einem unterschiedlichen Dehnungsverhalten der Absorberbleche und der Rohre gerechnet werden muß, und die Gefahr einer Wärmeüberbelastung der insbesondere durch ein Weichlöten hergestellten Lötverbindungen nicht ausgeschloßen werden kann, so daß unter Umständen mit einer Beeinträchtigungen der Verbindungen zwischen den Rohren und den Absorberblechen zu rechnen ist.

Der Erfindung liegt somit die Aufgabe zugrunde, eine wärmeleitende Verbindung zwischen zwei Metallteilen eines Wärmetausches, insbesondere eines Sonnenkollektors, der eingangs geschilderten Art so auszugestalten, daß nicht nur vergleichsweise einfache Herstellungsbedingungen sichergestellt, sondern auch eine ausreichende Wärmebelastbarkeit gewährleistet werden kann.

Die Erfindung löst die gestellte Aufgabe dadurch, daß die Verbindungsschicht aus einem dreidimensional vernetzten Vulkanisat mit einer Metallpulverfüllung besteht.

Da die Verbindungsschicht aus einem dreidimensional vernetzten Vulkanisat gebildet wird, wird in vorteilhafter Weise ein ausreichend elastisches Verhalten erreicht, um über die Verbindungsschicht unterschiedliche Wärmedehnungen der zu verbindenden Metallteile ohne eine Gefährdung der Verbindung ausgleichen zu können. Da übliche Vulkanisate den beispielsweise bei Sonnenkollektoren auftretenden Temperaturbelastungen durchaus gewachsen sind, bilden solche Vulkanisate vorteilhafte Verbindungsschichten zwischen den Metallteilen, wenn für eine entsprechende Wärmeleitfähigkeit gesorgt wird. Zur Verbesserung der Wärmeleitfähigkeit weist das Vulkanisat eine Metallpulverfüllung auf, so daß mit einer Metallpulverfüllung versehene Vulkanisate auch allen Anforderungen hinsichtlich der Wärmeübertragung zwischen den über das jeweilige Vulkanisat verbundenen Metallteilen genügen.

Je nach den wärmetechnischen Anforderungen kann der Gehalt an Metallpulver variiert werden. Üblicherweise wird der Anteil der Metallpulverfüllung an der Verbindungsschicht 30 bis 70 Gew.% betragen. Besonders vorteilhafte Verhältnisse, die gute Festigkeitseigenschaften mit guten Wärmeleiteigenschaften verknüpfen, werden allerdings bei Metallpulveranteilen zwischen 40 und 50 Gew.% der Verbindungsschicht erhalten.

Im Vergleich zur Herstellung einer Lötverbindung, die ebenfalls eine Wärmebehandlung voraussetzt, ergeben sich für das Herstellen einer erfindungsgemäßen Verbindungsschicht einfachere Verhältnisse, wenn zunächst Kautschuk mit Metallpulver in einem geeigneten Mischungsverhältnis gemischt und dann die Mischung auf das mit einem Absorberblech zu verbindende Rohr aufgebracht wird, bevor das Rohr auf das Absorberblech niedergespannt und die Kautschukmischung unter dreidimensionaler Vernetzung in üblicher Weise vulkanisiert wird.

In der Zeichnung ist der Erfindungsgegenstand beispielsweise dargestellt. Es zeigen
- Fig. 1: einen Sonnenkollektor mit auf einem Absorberblech erfindungsgemäß befestigten Rohren ausschnittsweise in einem Schnitt senkrecht zu den Rohrachsen,
- Fig. 2: ein Rohr, auf das in einem ersten Verfahrensschritt eine Mischung aus Kautschuk und Metallpulver aufgebracht wurde, in einem Querschnitt und
- Fig. 3: dieses Rohr mit dem aufgebrachten Kautschukgemisch nach dem Niederspannen auf ein Absorberblech in Vorbereitung einer nachfolgenden dreidimensionalen Vernetzung.

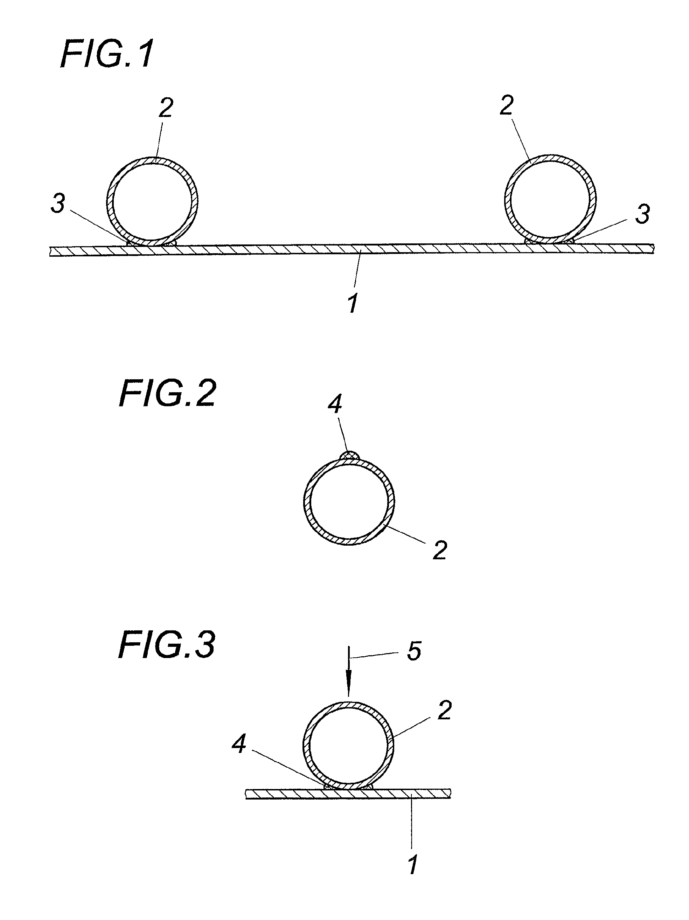

Der Sonnenkollektor nach dem Ausführungsbeispiel der Fig. 1 besteht aus einem Absorberblech 1, auf dem Rohre 2, beispielsweise aus Kupfer, befestigt sind. Diese Rohre 2, durch die ein Wärmeträger strömt, sind mit dem üblicherweise beschichteten Absorberblech 1 über eine Verbindungsschicht 3 verbunden, die aus einem Vulkanisat mit einer Metallpulverfüllung besteht. Als Metallpulver kann vorzugsweise Kupferpulver eingesetzt werden, das vorteilhafte Wärmeübertragungseigenschaften besitzt. Mit einem Metallpulveranteil von 40 bis 50 Gew.% an der Verbindungsschicht 3 können gute Wärmeübergangsbedingungen vom Absorberblech 1 auf die Rohre 2 sichergestellt werden, und zwar unter Ausnützung der besonderen elastischen Eigenschaften des Vulkanisats. Es wird daher ein guter, einer Lötverbindung durchaus vergleichbarer Wärmeübergang vom Absorberblech 1 auf die Rohre 2 und in weiterer Folge auf den Wärmeträger möglich. Die mit einer Lötverbindung auftretenden Nachteile werden jedoch vermieden.

Wie den Fig. 2 und 3 entnommen werden kann, ergibt sich ein einfaches Herstellungsverfahren für eine wärmeleitende Verbindung zwischen den Rohren 2 und dem Absorberblech 1 eines Sonnenkollektors, weil das Gemisch 4 aus Kautschuk und Metallpulver lediglich auf die Rohre 2 aufgetragen werden muß, wie dies in der Fig. 2 angedeutet ist, bevor die Rohre 2 gegenüber einem Absorberblech 1 positioniert und gegen das Absorberblech 1 niedergespannt werden, was in der Fig. 3 durch den Pfeil 5 angedeutet ist. Die Umwandlung des Kautschuks aus dem vorwiegend plastischen in den elastischen Zustand durch dreidimensionale Vernetzung erfolgt in üblicherweise mit Hilfe von Vulkanisationsmitteln unter einer entsprechenden Wärmeanwendung. Nach der Vulkanisation bildet das Vulkanisat eine dauerhafte, wärmeleitende Verbindungsschicht 3 zwischen den zu verbindenden Metallteilen 1 und 2.

Als Kautschuk können alle Natur- und Synthesekautschuke eingesetzt werden. Voraussetzung für die Auswahl ist, daß das Vulkanisat trotz der Metallpulverfüllung ausreichende Festigkeitseigenschaften und eine entsprechende Wärmebelastbarkeit aufweist.

Die Erfindung ist selbstverständlich nicht auf das dargestellte Ausführungsbeispiel beschränkt, weil nicht nur Rohre und Absorberbleche von Sonnenkollektoren über ein Vulkanisat mit Metallpulverfüllung verbunden werden können, sondern auch andere metallische Teile von Wärmetauschern, wenn es gilt, zwischen diesen Metallteilen eine wärmeleitenden Verbindung mit einfachen Mitteln aufzubauen.

## Patentansprüche

1. Wärmeleitende Verbindung zwischen zwei Metallteilen eines Wärmetauschers, insbesondere eines Sonnenkollektors, mit einer Verbindungsschicht zwischen den beiden vorzugsweise aus einem Rohr und einem Absorberblech gebildeten Metallteilen, **dadurch gekennzeichnet, daß** die Verbindungsschicht (3) aus einem dreidimensional vernetzten Vulkanisat mit einer Metallpulverfüllung besteht.

2. Wärmeleitende Verbindung nach Anspruch 1, **dadurch gekennzeichnet, daß** der Anteil der Metallpulverfüllung an der Verbindungsschicht (3) 30 bis 70 Gew.%, vorzugsweise 40 bis 50 Gew.%, beträgt.

3. Verfahren zum Herstellen einer wärmeleitenden Verbindung zwischen zwei Metallteilen eines Wärmetauschers, insbesondere eines Sonnenkollektors, wobei zwischen den beiden aus einem Rohr und einem Absorberblech bestehenden Metallteilen eine Verbindungsschicht aufgebracht und dann einer Wärmebehandlung unterworfen wird, **dadurch gekennzeichnet, daß** zunächst Kautschuk mit Metallpulver gemischt und dann die Mischung auf das Rohr aufgebracht wird, bevor das Rohr auf das Absorberblech niedergespannt und die Kautschukmischung unter dreidimensionaler Vernetzung vulkanisiert wird.
